# FASCICULE DE BREVET EUROPEEN

(11) **EP 0 591 020 B1**
(45) Date de publication et mention de la délivrance du brevet: **02.12.1998**
(21) Numéro de dépôt: 93402221.1
(22) Date de dépôt: 13.09.1993
(51) Int. Cl.: G06F 9/46

(54) **Utilisation de "tubes" pour le transfert d'états entre systèmes distants**
Verwendung von Röhren zum Transfer von Zuständen zwischen Systemen
Use of pipes for transfer of states between remote systems

(30) Priorité: 30.09.1992 FR 9211621
(43) Date de publication de la demande: 06.04.1994
(73) Titulaire: BULL S.A., 78434 Louveciennes (FR)
(72) Inventeur: Coutand, Bernard, F-44190 Clisson (FR)
(74) Mandataire: Debay, Yves

(56) Documents cités:
- EP-A- 0 419 066
- WO-A-83/01851
- GB-A- 2 201 272
- ELEKTRONIK vol. 34, no. 9 , Mai 1985 , MUNCHEN DE pages 83 - 88 L.V.D.HOVEN ET AL. 'Hardware-und Software Maschinen'
- M.J.BACH 'The Design of the UNIX Operating System' 1986 , PRENTICE/HALL , LONDON * page 112 - page 117, ligne 5 *
- MICROPROCESSORS AND MICROSYSTEMS vol. 10, no. 3 , Avril 1986 , LONDON GB pages 156 - 160 'Message-Passing Primitives for Multimicroprocessor Systems'

## Description

La présente invention concerne un procédé de transfert, vers un système local gérant une imprimante, d'une pluralité de fichiers comportant les états en provenance d'une pluralité de systèmes distants d'un réseau pour une édition desdits états sur l'imprimante du système local.

Lorsque divers systèmes distants les uns des autres sont connectés sur un réseau et dialoguent entre eux, généralement seul le système local, pour des raisons de coût, est susceptible d'être équipé d'un système d'impression non impact sophistiqué. Dans ces conditions et jusqu'à présent, quand il est désiré effectuer des transferts d'états, du type connu sous le nom de SYSOUT (les SYSOUT étant des fichiers imprimables), des systèmes distants vers le système local, lesdits transferts sont effectués à la main, c'est-à-dire qu'un opérateur doit lancer une commande de transfert de fichier. En outre, si le système local est équipé d'un système d'impression non impact sophistiqué, ce dernier ne permet d'imprimer que les états en provenance dudit système local, ainsi les états en provenance des systèmes distants "off-line", c'est-à-dire non connectés au système local, ne peuvent être directement imprimés. Un opérateur devra alors monter sur le système local des bandes magnétiques contenant les états en provenance des systèmes distants, ce qui est totalement anachronique dans un tel environnement sophistiqué et présente de graves inconvénients en interdisant l'automaticité du procédé.

La présente invention a pour but de remédier à ces divers inconvénients et propose un procédé tel que défini dans la revendication 1 qui de manière simple et efficace autorise une totale automatisation de l'exploitation.

La présente invention propose également un automate tel que défini dans la revendication 8 mettant en oeuvre ledit procédé.

Pour cela le procédé est remarquable en ce que, l'imprimante étant connectée à un réseau de télécommunications, à chaque transfert de fichier d'un système distant sont associés deux fichiers de synchronisation du type connu sous le nom de "tube", un premier dans le sens système local vers système distant et un second dans le sens système distant vers système local permettant ainsi le rapatriement d'éditions multiples et assurant principalement la synchronisation et la communication entre d'une part, un processus de scrutation et de commande lancé sur le système local et chargé de surveiller le système distant associé et de lui envoyer la commande de l'état à transmettre et d'autre part, un processus de transfert de fichier chargé de renvoyer les états à éditer du système distant vers le système local.

Ainsi, l'idée de l'invention consiste principalement à utiliser pour la première fois des fichiers de synchronisation ou "tubes" pour le transfert des états d'une pluralité de systèmes distants vers un système local. L'invention présente de la sorte une solution à un problème technique que l'homme du métier s'efforçait de résoudre depuis longtemps et permet en outre de satisfaire des besoins d'automatisation de l'exploitation (alors que certaines opérations étaient exécutées manuellement) et de réduction des coûts (suppression des opérateurs) qui existaient également. Le fichier de synchronisation ou "tube" est un fichier séquentiel qui est décrit sous le nom de "conduit" dans l'ouvrage de M.J. ROCHKIND publié chez MASSON sous le titre "UNIX programmation avancée". C'est en fait un pseudo-fichier qui a été modifié pour assurer une synchronisation entre un émetteur (écrivain) et un récepteur (lecteur) et une mise en file d'attente en offrant une manière commode d'organiser et de distribuer des tâches. Un automate est ainsi créé en associant à un transfert de fichier dépendant d'une application existant déjà sur les divers systèmes, un fichier de synchronisation en entrée et un second en sortie. Les deux processus principaux de scrutation et de commande d'une part et de transfert d'autre part, sont reliés par ces fichiers de synchronisation et peuvent ainsi communiquer. Un transfert de fichier non associé à des fichiers de synchronisation ne peut être utilisé de manière simple pour dialoguer avec une tâche (nécessité de modifier le transfert de fichier, de placer des sémaphores,...) alors qu'il est directement utilisable et automatisé en appliquant l'idée de l'invention. Une ou plusieurs tâches écrivent dans le fichier de synchronisation et les autres le lisent. Si le fichier est vide mais ouvert en écriture, les lectures sont suspendues jusqu'à ce que les données (articles) soient disponibles. La lecture de données du fichier de synchronisation est suivie implicitement de la suppression de ces données. Lorsque le fichier est codé et qu'il n'est plus ouvert en écriture, toute tentative de lecture se traduit par l'affichage d'un code "fin de fichier". L'automatisation de l'édition et la sécurité du transfert sont ainsi assurées.

La description suivante en regard des dessins annexés, le tout donné à titre d'exemple non limitatif, fera bien comprendre comment l'invention peut être réalisé.

La figure 1 propose un schéma synoptique du fonctionnement en automate obtenu par le procédé selon l'invention.

La figure 2 présente un exemple de liaison entre systèmes utilisant le procédé selon l'invention.

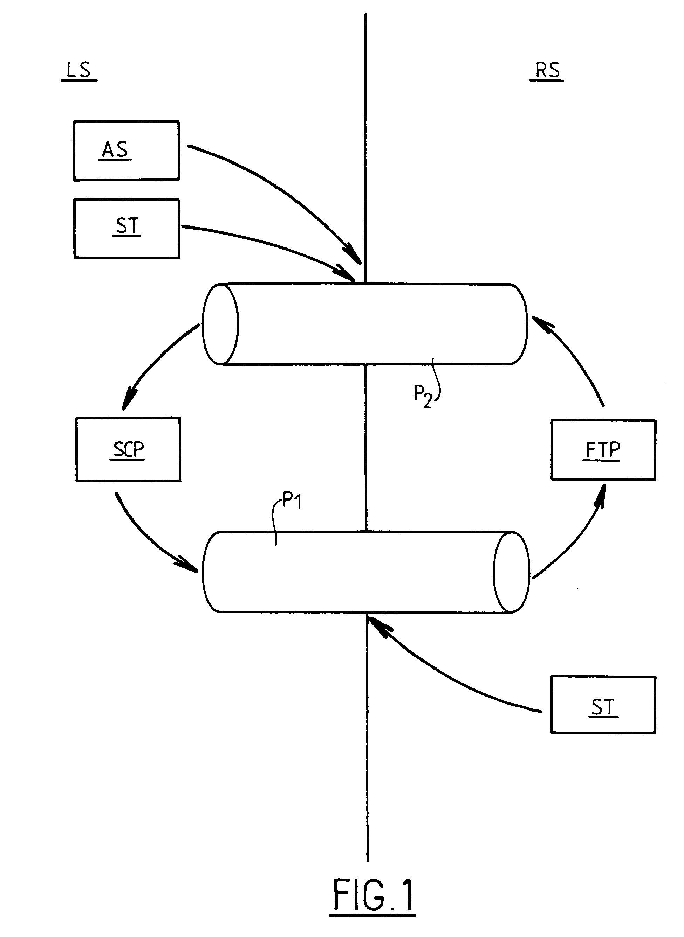

Le schéma synoptique de la figure 1 permet de dégager le principe général suivant qui concerne la communication entre processus. Le système local LS lance les surveillances qui vont permettre d'analyser chacun des différents systèmes distants RS contenant les noms des fichiers imprimables ou SYSOUT pour rapatrier lesdits fichiers imprimables. Pour transposer cet ensemble de systèmes au domaine des systèmes clients/serveur, il suffira dans la suite de considérer le système local comme étant le serveur et les systèmes distants les clients. Le système local gère une imprimante et est donc chargé de surveiller une pluralité d'autres systèmes distants qui peuvent avoir à procéder à des éditions sur cette imprimante.

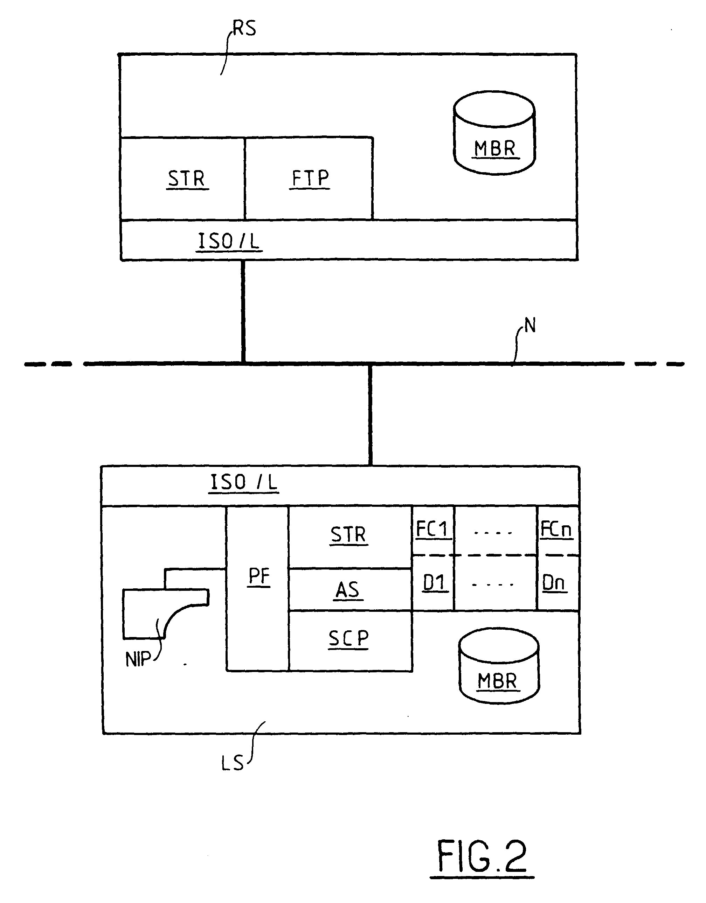

Conformément à l'idée de l'invention le procédé de transfert, vers le système local LS gérant une imprimante, d'une pluralité de fichiers comportant les états en provenance d'une pluralité de systèmes distants RS d'un réseau N (voir figure 2) pour une édition desdits états sur l'imprimante du système local est remarquable en ce que, l'imprimante étant connectée à un réseau de télécommunications, à chaque transfert de fichier d'un système distant RS sont associés deux fichiers de synchronisation P₁, P₂ du type connu sous le nom de "tube", un premier P₁ dans le sens système local vers système distant et un second P₂ dans le sens système distant vers système local créant ainsi un automate de rapatriement d'éditions multiples assurant principalement la synchronisation et la communication entre d'une part, un processus de scrutation et de commande SCP lancé sur le système local LS et chargé de surveiller le système distant RS et de lui envoyer la commande de l'état à transmettre et d'autre part, un processus de transfert de fichier FTP chargé de renvoyer les états à éditer du système distant RS vers le système local LS.

Ainsi à chaque système distant RS est associée une tâche de surveillance effectuée au moyen d'un processus de scrutation et de commande SCP lancé sur le système local qui en outre commande le nom des états à transmettre et en réponse à cette commande un processus de transfert de fichier FTP permet au système distant de renvoyer les états à éditer vers le système local. A toute surveillance correspond donc un groupe de tâches participant à l'activité "multi-tâches" du système local, et bien que le nombre de surveillances ne soit théoriquement pas limité, il est raisonnable de prévoir une limitation à ce nombre car au-delà d'un certain degré de multiprogrammation l'activité normale du processeur central dans le système local ne peut se maintenir et les performances diminuent de manière significative. Pour éviter cette détérioration des performances le nombre de surveillances peut être par exemple limité à huit.

Plus précisément décrit à l'aide de la figure 2, le procédé selon l'invention s'articule autour du processus SCP dont la tâche principale est de gérer les transferts de fichiers au moyen d'une application STR, existant déjà dans les différents systèmes, dédiée au transfert des états à rapatrier. Lorsqu'un ordre d'impression est donné sur le système distant RS, le nom de l'état et ses paramètres d'impression sont stockés dans une station. La représentation réelle de la notion de station sur le système distant est ici la boîte aux lettres MBR. Quand la surveillance est lancée, il est opéré une scrutation de la ou des stations qui lui sont affectées. Si la station MBR est vide, la surveillance se met en attente, dans le cas contraire le processus SCP demande le rapatriement des états de la station affectée. Sur le système distant RS le processus FTP est chargé de regarder dans la boîte à lettres MBR s'il y a des états en attente d'impression et de renvoyer le nom de l'état ainsi que sa localisation physique. Les état rapatriés vers le système local LS sont alors stockés sous le répertoire Di du disque de stockage, i variant de 1 à 8 (si la limitation des surveillances est fixée à huit) en fonction du numéro de rapatriement et l'édition de ces mêmes états est lancée automatiquement lors de l'application du procédé selon l'invention. Sur le système local, les trois tâches les plus importantes utilisées selon le présent procédé sont la tâche SCP, tâche principale qui par l'intermédiaire des deux fichiers P₁ et P₂ gère les commandes et les messages de la tâche STR, ensuite la tâche STR dédiée au transfert des états à rapatrier et enfin une tâche AS propre à la surveillance de l'automate constitué.

L'utilisateur peut, en outre, personnaliser le traitement final de l'état rapatrié par modification du fichier approprié PF qui peut être ainsi destiné à une utilisation soit avec un système d'impression non impact NIP comme représenté sur la figure, soit avec un système d'impression classique ou encore avec un périphérique de stockage, l'ordre d'impression dépendant alors du système d'impression choisi.

La scrutation des stations peut être réalisée en série ou en parallèle. Ainsi, si une scrutation parallèle est opérée les stations sont examinées en parallèle et à une surveillance correspondra un groupe de tâches. Par contre, lors d'une scrutation série un même groupe de tâches examine plusieurs stations. La surveillance de ces stations comporte un certain nombre de paramètres communs entre elles, heure de début et de fin de scrutation, même nom de système distant, etc... . Dans le présent procédé il sera utilisé de préférence une scrutation parallèle.

Comme cela a été vu précédemment, une station logique d'un système correspond à une notion physique du système qui est la boîte aux lettres. Cette notion de station représente une ressource du système et permet de stocker les différents états à imprimer. L'impression peut être effectuée en local par une boîte aux lettres telle que MBR. Pour que la boîte aux lettres dédiée à l'impression, qui est plus communément appelée queue d'impression, soit modifiée il suffit de se conformer à la syntaxe de la commande d'impression (de manière générale la commande d'impression propre à un système d'impression classique) pour dévier le stockage des états vers une nouvelle queue d'impression.

Un tel procédé de transfert de fichier présente ainsi divers avantages dont le premier est relatif à la sécurité du transfert. En effet, ledit procédé utilise sur le système local, pour les transferts de fichier, l'application STR existant déjà sur les divers systèmes. Cette application STR gère un premier niveau d'erreur, elle permet d'obtenir un fichier identique à celui du système distant au travers des couches ISO référencées ISO/L sur le dessin. Lors d'un transfert de fichier si l'application STR est interrompue à la suite d'un problème de réseau, le transfert en cours sera repris entièrement ultérieurement, ce type d'erreur est avantageusement géré selon le présent procédé. De plus, si le système interrompt le groupe de tâches d'un processus ou si le groupe de tâches s'interrompt tout seul, le transfert en cours sera repris automatiquement à la relance du procédé. D'autres avantages apparaissent également relativement à la simultanéité des rapatriements et à la transparence quant à l'exploitation par des imprimantes différentes. Un autre avantage très significatif tient au fait qu' avec l'utilisation d'un tel automate, le nombre d'opérations est sensiblement réduit, un gain de temps, une diminution du coût et une augmentation des performances étant par conséquent entraînés.

Selon une application préférée, le procédé selon l'invention est remarquable en ce qu'en outre, à chaque scrutation est associé un fichier de configuration de scrutation contenant principalement les paramètres relatifs au nom du système local, au nom du système distant scruté, au nom de la station ou boîte aux lettres scrutée, à l'heure du début de scrutation, au nom du disque de rapatriement d'états et aux paramètres d'états à rapatrier.

Ainsi des fichiers de configuration de scrutation FCi (i variant de 1 à 8 dans le présent exemple) sont générés ou mis à jour lors de l'installation, c'est-à-dire de la configuration des différentes scrutations, pour contenir chacun les différents paramètres concernant une scrutation et par conséquent une surveillance donnée. Il existe donc un fichier de configuration de scrutation par surveillance et ce fichier est situé sous le répertoire FCi du disque de stockage du système local.

Par conséquent, à chaque scrutation correspondent deux répertoires sur le disque de stockage, un premier, FCi, qui contient le fichier propre à cette scrutation et un second Di dont la localisation est indiquée sous le répertoire FCi et qui contient les états rapatriés. Pour effacer une scrutation il suffit, à l'inverse, de vider ses répertoires FCi et Di associés.

Il est à noter qu'une boîte aux lettres dans laquelle vont être stockés les états ne doit pas être quelconque. En effet, l'impression locale utilise déjà un certain nombre de boîtes aux lettres et il faut donc vérifier son existence.

En résumé, pour effectuer les transferts d'états à travers les réseaux, le système local et les systèmes distants dialoguent en s'échangeant des messages. Les communications entre un système distant et le système local se font avantageusement, comme cela a été précédemment décrit selon le présent procédé, grâce aux fichiers de synchronisation ou "tubes" P₁ et P₂. Ces fichiers ou "tubes" permettent, par l'intermédiaire de l'application spécifique STR, aux tâches d'accéder directement aux informations qui leur sont réservées. Pour autoriser un tel dialogue, le procédé selon l'invention utilise principalement deux tâches exécutées respectivement suivant les processus SCP et FTP. Le processus SCP interroge le processus FTP pour connaître les noms des états à transférer vers le système local en vue d'une impression. Le processus SCP est, en fait, initiateur car c'est lui qui détermine l'envoi du message contenant une demande de nom d'état. Cette demande comporte un certain nombre d'informations qui permettent de connaître en outre le nom de la boîte aux lettres dans laquelle sont situés les noms des états désirés. Le processus FTP, en réponse à cette demande, va examiner la boîte aux lettres. Si cette dernière est vide, un message spécifique est envoyé, dans le cas contraire le nom de l'état avec sa situation sur le système distant ainsi que des paramètres d'impression sont renvoyés vers le système local pour être exploités par le processus SCP. Ce dernier dispose alors de toutes les informations nécessaires pour effectuer le rapatriement de l'état en attente et ce transfert est réalisé également à l'aide de l'application STR existant déjà dans les différents systèmes. L'état rapatrié est stocké sur le disque d'accueil du système local sous le répertoire Di adéquat et en fin de transfert une commande d'impression est lancée par le fichier PF par lequel est sélectionné le système d'impression destiné à l'édition.

Le processus de scrutation et de commande agit en fait comme un automate qui reçoit les informations par le fichier de synchronisation, les analyse puis exécute les traitements appropriés.

De manière particulière, le processus de scrutation et de commande commence par lire le fichier de configuration de scrutation FCi approprié pour connaître les informations nécessaires à la scrutation, entre autres, le nom du système distant RS à surveiller et le nom de la boîte aux lettres MBR dans laquelle est stocké l'état désiré, puis il entre dans une première boucle, communique vers le système distant par l'intermédiaire du premier fichier de synchronisation P1 dans lequel il écrit les informations pour la demande du nom d'état et lance la commande de l'application spécifique connue STR pour la transmission des informations. Il se met ensuite en attente pour la lecture d'une réponse du système distant par l'intermédiaire du second fichier de synchronisation P2 et entre dans une seconde boucle qui permet de lire les messages reçus en réponse. Si la réponse comporte un message "boîte aux lettres vide", il reste en attente pendant un temps prédéterminé, par exemple plusieurs secondes, puis réenvoie une demande. Si, par contre, la réponse comporte le nom de l'état à rapatrier, une demande de transfert est émise par l'intermédiaire du premier fichier de synchronisation P1 au moyen de l'application spécifique connue STR. L'état qui est alors rapatrié est stocké dans un répertoire Di approprié alors qu'une commande d'impression est lancée.

Egalement de manière caractéristique, le processus de transfert de fichier va dans une phase préliminaire attendre un message en provenance du système local LS par l'intermédiaire du premier fichier de synchronisation P1, puis il entre dans une boucle lorsqu'il détecte l'arrivée du message et lit les informations contenant, entre autres, le nom de la boîte aux lettres MBR dans laquelle doit être stocké l'état à rapatrier et le nom du système local LS en attente de l'état à rapatrier. Il va ensuite lire dans la boîte aux lettres désignée si l'état désiré y est stocké et au moyen de l'application spécifique connue STR il peut alors émettre deux types de réponses vers le système local par l'intermédiaire du second fichier de synchronisation P2. Si la boîte aux lettres est vide, il est prévenu par un code d'erreur et il envoie dans ce cas vers le système local un message du type "boîte aux lettres vide", sinon il reçoit les informations relatives au nom de l'état désiré avec sa localisation exacte et à ses paramètres d'impression et dans ce cas, il envoie vers le système local ces informations propres à l'état à rapatrier.

En outre, et comme cela apparaît sur la figure 1, le procédé selon l'invention utilise avantageusement un processus d'arrêt ST permettant d'interrompre ainsi une ou plusieurs scrutations. Suivant le processus ST, un message d'arrêt écrit dans le fichier de synchronisation d'une scrutation particulière permet d'interrompre ladite scrutation en cours. Ce processus ST appelé plusieurs fois avec un paramètre différent, un paramètre correspondant à un numéro de scrutation, autorise l'interruption du nombre désiré de scrutations. La figure 1 montre que le processus ST peut être appliqué pour être opéré localement dans les fichiers de synchronisation P1 et P2.

Montré également sur la figure 1, de manière remarquable, le processus AS de surveillance de l'automate ainsi créé est prévu pour débloquer le système local en cas de problème de réseau. Au début d'un espace de temps prédéterminé, par exemple chaque minute, tout au long de l'application du procédé le processus AS est chargé d'émettre localement un message spécifique écrit dans le second fichier de synchronisation P2. Le processus de scrutation et de commande SCP reçoit et analyse ce message spécifique et compte son nombre d'apparitions successives. Si le réseau est bloqué, le processus SCP ne reçoit plus alors que ces messages spécifiques puisqu'il ne peut plus communiquer avec le processus de transfert de fichier FTP. Lorsque ce message est reçu successivement un certain nombre de fois prédéterminé sans autres informations, par exemple au bout de six minutes, donc de six apparitions successives sans communication le réseau est considéré bloqué et le processus SCP est interrompu.

Pour conclure, le procédé de transfert de fichier entre systèmes distants tel que décrit et revendiqué est directement exploitable et automatisé du fait de l'utilisation pour la première fois de fichiers de synchronisation pour ce type de transfert. Un automate est ainsi avantageusement et efficacement créé de manière simple en associant à un transfert de fichier dépendant d'une application existant déjà sur les divers systèmes, un fichier de synchronisation en entrée et un second en sortie pour relier un processus de scrutation et de commande à un processus de transfert de fichier. Ces deux processus peuvent ainsi communiquer aisément. Grâce à ce procédé la sécurité des transferts est de plus garantie. Divers autres avantages, de plus, apparaissent quant à la simultanéité des rapatriements des fichiers et à la transparence en ce qui concerne l'exploitation par des imprimantes différentes. L'utilisateur peut, en outre, personnaliser le traitement final de l'état rapatrié en sélectionnant le système d'impression désiré. D'autre part, avec l'utilisation d'un tel automate, le nombre d'opérations est très significativement réduit entraînant de la sorte un gain de temps et une diminution des coûts sensibles de même qu'une notable augmentation des performances.

## Revendications

1. Procédé de transfert, vers un système local gérant une imprimante, d'une pluralité de fichiers comportant les états en provenance d'une pluralité de systèmes distants d'un réseau pour une édition desdits états sur l'imprimante du système local , caractérisé en ce que , l'imprimante étant connectée sur un réseau de télécommunications, à chaque transfert de fichier d'un système distant sont associés deux fichiers de synchronisation du type connu sous le nom de "tube", un premier dans le sens système local vers système distant et un second dans le sens système distant vers système local, permettant ainsi le rapatriement d'éditions multiples et assurant principalement la synchronisation et la communication entre d'une part, un processus de scrutation et de commande lancé sur le système local et chargé de surveiller le système distant associé et de lui envoyer la commande de l'état à transmettre et d'autre part un processus de transfert de fichier chargé de renvoyer les états à éditer du système distant vers le système local.

2. Procédé de transfert de fichier selon la revendication 1, caractérisé en ce que, en outre, à chaque scrutation est associé un fichier de configuration de scrutation contenant principalement les paramètres relatifs au nom du système local, au nom du système distant scruté, au nom de la boîte aux lettres scrutée, à l'heure du début de scrutation, au nom du disque de rapatriement d'états et aux paramètres d'états à rapatrier.

3. Procédé de transfert de fichier selon la revendication 1 ou 2, caractérisé en ce que, par l'intermédiaire des fichiers de synchronisation communiquant au moyen d'une application spécifique les différents messages, dans une première étape le processus de scrutation et de commande interrogeant le processus de transfert de fichier pour connaître les noms des états à transférer vers le système local en vue d'une impression envoie un message contenant une demande de nom d'état, demande comportant les informations qui permettent de connaître, en outre le nom de la boîte aux lettres du système distant dans laquelle se trouve le nom de l'état désiré, puis dans une seconde étape, le processus de transfert de fichier en réponse à cette demande, examine ladite boîte aux lettres pour, si cette dernière est vide envoyer un message spécifique vers le système local et dans le cas contraire envoyer vers le système local les informations relatives au nom de l'état avec sa situation sur le système distant ainsi qu'aux paramètres d'impression, informations qui sont alors exploitées par le processus de scrutation et de commande qui dans une troisième étape effectue le rapatriement de l'état en attente, l'état rapatrié étant alors stocké sur un disque d'accueil du système local sous un répertoire qui lui est destiné et enfin dans une quatrième étape à la fin du transfert, une commande d'impression est lancée pour l'édition de l'état sur l'imprimante du système local désirée.

4. Procédé de transfert de fichier selon la revendication 3, caractérisé en ce que, le processus de scrutation et de commande commence par lire le fichier de configuration de scrutation approprié pour connaître les informations nécessaires à la scrutation, entre autres, le nom du système distant à surveiller et le nom de la boîte aux lettres dans laquelle est stocké l'état désiré, puis entre dans une première boucle, communique vers le système distant par l'intermédiaire du premier fichier de synchronisation dans lequel il écrit les informations pour la demande du nom d'état, lance la commande de l'application spécifique pour la transmission des informations, se met en attente pour la lecture d'une réponse du système distant, par l'intermédiaire du second fichier de synchronisation, et entre dans une seconde boucle, si la réponse comporte un message "boîte aux lettres vide" reste en attente un temps prédéterminé puis réenvoie une demande, ou si la réponse comporte le nom de l'état à rapatrier demande son transfert par l'intermédiaire du premier fichier de synchronisation au moyen de l'application spécifique, rapatrie cet état qui est stocké dans un répertoire approprié et enfin lance une commande d'impression.

5. Procédé de transfert de fichier selon la revendication 4, caractérisé en ce que, le processus de transfert de fichier dans une phase préliminaire de surveillance attend un message en provenance du système local par l'intermédiaire du premier fichier de synchronisation, puis entre dans une boucle lorsqu'il détecte l'arrivée du message et lit les informations contenant, entre autres, le nom de la boîte aux lettres dans laquelle doit être stocké l'état à rapatrier et le nom du système local en attente de l'état à rapatrier, va ensuite lire dans la boîte aux lettres appropriée si l'état désiré y est stocké, et au moyen de l'application spécifique par l'intermédiaire du second fichier de synchronisation, si la boîte aux lettres est vide et après réception d'un code d'erreur envoie vers le système local un message "boîte aux lettres vide", sinon après réception des informations relatives au nom de l'état désiré avec sa localisation exacte et ses paramètres d'impression, envoie vers le système local lesdites informations concernant l'état à rapatrier.

6. Procédé de transfert de fichier selon la revendication 5, caractérisé en ce que, en outre, un processus d'arrêt est utilisé localement pour interrompre une ou plusieurs scrutations, un message d'arrêt étant pour cela écrit dans le fichier de synchronisation d'une scrutation particulière et ceci pour chacune des scrutations à interrompre.

7. Procédé de transfert de fichier selon la revendication 6, caractérisé en ce que, de plus, un processus de surveillance est prévu pour débloquer le système local en cas de problème de réseau, le processus étant chargé d'émettre localement, à chaque début d'un espace de temps prédéterminé et ceci tout au long de l'application du procédé, un message spécifique écrit dans le fichier de synchronisation, le processus de scrutation et de commande qui reçoit et analyse ledit message spécifique et compte le nombre de ses apparitions successives, détectant un blocage du réseau et étant alors automatiquement interrompu lorsque seul ledit message sans autres informations est reçu un nombre successif de fois prédéterminé.

8. Automate de rapatriement d'éditions multiples mettant en oeuvre le procédé de transfert selon l'une quelconque des revendications précédentes,
ledit procédé de transfert, vers un système local gérant une imprimante, d'une pluralité de fichiers comportant les états en provenance d'une pluralité de systèmes distants d'un réseau pour une édition desdits états sur l'imprimante du système local, étant défini en ce que, l'imprimante étant connectée sur un réseau de télécommunications, à chaque transfert de fichier d'un système distant sont associés deux fichiers de synchronisation du type connu sous le nom de "tube", un premier dans le sens système local vers système distant et un second dans le sens système distant vers système local, permettant ainsi le rapatriement d'éditions multiples et assurant principalement la synchronisation et la communication entre d'une part, un processus de scrutation et de commande lancé sur le système local et chargé de surveiller le système distant associé et de lui envoyer la commande de l'état à transmettre et d'autre part un processus de transfert de fichier chargé de renvoyer les états à éditer du système distant vers le système local.

## Patentansprüche

1. Verfahren zum Übertragen mehrerer Dateien an ein einen Drucker steuerndes lokales System, wobei die Dateien die von mehreren entfernten Systemen eines Netzes stammenden Zustände für eine Änderung der Zustände im Drucker des lokalen Systems enthalten, dadurch gekennzeichnet, daß, wenn der Drucker an ein Telekommunikationsnetz angeschlossen ist, jeder Übertragung einer Datei von einem entfernten System zwei Synchronisationsdateien des unter dem Namen "tube" bekannten Typs zugeordnet sind, eine erste in Richtung vom lokalen System zum entfernten System und eine zweite in Richtung vom entfernten System zum lokalen System, wodurch die Rückführung von Mehrfachausdrucken ermöglicht wird und hauptsächlich die Synchronisation und die Kommunikation einerseits zwischen einem Abfrage- und Steuerprozeß, der in dem lokalen System gestartet wird und die Aufgabe hat, das zugeordnete entfernte System zu überwachen und an es den zu sendenden Zustandsbefehl zu schikken, und andererseits einem Dateiübertragungsprozeß, der die Aufgabe hat, die zu ändernden Zustände des entfernten Systems zum lokalen System zurückzuschicken, sichergestellt werden.

2. Verfahren zur Dateiübertragung nach Anspruch 1, dadurch gekennzeichnet, daß außerdem jeder Abfrage eine Abfragekonfigurationsdatei zugeordnet ist, die hauptsächlich Parameter enthält, die auf den Namen des lokalen Systems, auf den Namen des abgefragten entfernten Systems, auf den Namen des abgefragten Briefkastens, auf die Uhrzeit des Beginns der Abfrage, auf den Namen der Zustandsrückführungsplatte und auf die rückzuführenden Zustandsparameter bezogen sind.

3. Verfahren zur Dateiübertragung nach Anspruch 1 oder 2, dadurch gekennzeichnet, daß über die Synchronisationsdateien, die mittels einer spezifischen Anwendung die verschiedenen Nachrichten austauschen, in einem ersten Schritt der Abfrage- und Steuerprozeß, der den Dateiübertragungsprozeß abfragt, um die Namen der zum lokalen System zu übertragenden Zustände im Hinblick auf einen Druckvorgang zu kennen, eine Nachricht schickt, die eine Zustandsnamenanforderung enthält, die ihrerseits die Informationen enthält, die ermöglichen, außerdem den Namen des Briefkastens des entfernten Systems, in dem sich der gewünschte Zustandsname befindet, zu kennen, dann in einem zweiten Schritt der Dateiübertragungsprozeß als Antwort auf diese Anforderung diesen Briefkasten untersucht, um, falls dieser leer ist, an das lokale System eine spezifische Nachricht zu schicken, und um im entgegengesetzten Fall an das lokale System die Informationen, die auf den Namen des Zustandes und seiner Situation im entfernten System sowie auf die Druckparameter bezogen sind, zu schicken, wobei die Informationen dann vom Abfrage- und Steuerprozeß ausgewertet werden, der in einem dritten Schritt die Rückführung des wartenden Zustands ausführt, wobei der rückgeführte Zustand dann in einer Aufnahmeplatte des lokalen Systems in einem Verzeichnis gespeichert wird, das für ihn vorgesehen ist, und schließlich in einem vierten Schritt am Ende der Übertragung ein Druckbefehl für den Ausdruck des Zustandes im Drucker des gewünschten lokalen Systems gestartet wird.

4. Verfahren zur Dateiübertragung nach Anspruch 3, dadurch gekennzeichnet, daß der Abfrage- und Steuerprozeß durch Lesen der geeigneten Abfrage-Konfigurationsdatei beginnt, um die für die Abfrage erforderlichen Informationen, unter anderem den Namen des zu überwachenden entfernten Systems und den Namen des Briefkastens, in dem der gewünschte Zustand gespeichert ist, zu kennen, dann in eine erste Schleife eintritt, mit dem entfernten System über die erste Synchronisationsdatei kommuniziert, in die er die Informationen für die Anforderung des Zustandsnamens schreibt, den Befehl der spezifischen Anwendung für die Übertragung der Informationen startet, in den Wartezustand übergeht, um eine Antwort des entfernten Systems über die zweite Synchronisationsdatei zu lesen, und in eine zweite Schleife eintritt, falls die Antwort eine Nachricht "Briefkasten leer" enthält, eine vorgegebene Zeit wartet und dann eine Anforderung zurückschickt, oder, falls die Antwort den Namen des zurückzuführenden Zustands enthält, dessen Übertragung über die erste Synchronisationsdatei mittels der spezifischen Anwendung anfordert, diesen Zustand, der in einem geeigneten Verzeichnis gespeichert ist, zurückführt und schließlich einen Druckbefehl startet.

5. Verfahren zur Dateiübertragung nach Anspruch 4, dadurch gekennzeichnet, daß der Dateiübertragungsprozeß in einer vorhergehenden Überwachungsphase eine vom lokalen System über die erste Synchronisationsdatei ausgehende Nachricht erwartet, dann in eine Schleife eintritt, wenn er die Ankunft der Nachricht erfaßt, und die Informationen liest, die unter anderem den Namen des Briefkastens, in dem der zurückzuführende Zustand gespeichert sein soll, und den Namen des lokalen Systems, das auf den zurückzuführenden Zustand wartet, enthält, anschließend im geeigneten Briefkasten liest, ob der gewünschte Zustand hier gespeichert ist, und mittels der spezifischen Anwendung über die zweite Synchronisationsdatei dann, wenn der Briefkasten leer ist, und nach Empfang eines Fehlercodes an das lokale System eine Nachricht "Briefkasten leer" schickt, und andernfalls nach Empfang der auf den Namen des gewünschten Zustands mit seiner genauen Lokalisierung und auf die Druckparameter bezogenen Informationen an das lokale System die Informationen schickt, die den zurückzuführenden Zustand betreffen.

6. Verfahren zur Dateiübertragung nach Anspruch 5, dadurch gekennzeichnet, daß außerdem lokal ein Halteprozeß verwendet wird, um eine oder mehrere Abfragen zu unterbrechen, wobei eine Haltenachricht hierfür in die Synchronisationsdatei einer besonderen Abfrage schreibt, und dies für jede der zu unterbrechenden Abfragen.

7. Verfahren zur Dateiübertragung nach Anspruch 6, dadurch gekennzeichnet, daß darüber hinaus ein Überwachungsprozeß vorgesehen ist, um das lokale System bei einem Netzproblem freizugeben, wobei der Prozeß die Aufgabe hat, lokal bei jedem Beginn eines vorgegebenen Zeitraums und während der gesamten Anwendung des Verfahrens eine spezifische Nachricht zu senden, die in die Synchronisationsdatei geschrieben ist, wobei der Abfrage- und Steuerprozeß, der die spezifische Nachricht empfängt und analysiert und die Anzahl ihrer aufeinanderfolgenden Auftritte zählt, eine Blockierung des Netzes erfaßt und dann automatisch unterbrochen wird, wenn nur die Nachricht ohne weitere Informationen in einer vorgegeben aufeinanderfolgenden Anzahl empfangen wird.

8. Automat zur Rückführung von Mehrfachausdrucken, der das Übertragungsverfahren nach irgendeinem der vorangehenden Ansprüche ausführt,
wobei das Verfahren zur Übertragung mehrerer Dateien, die die von mehreren entfernten Systemen eines Netzes stammenden Zustände enthalten, um die Zustände in einem Drucker eines lokalen Systems zu ändern, an ein den Drucker steuerndes lokales System dadurch definiert ist, daß, wenn der Drucker an ein Telekommunikationsnetz angeschlossen ist, jeder Dateiübertragung von einem entfernten System zwei Synchronisationsdateien des unter dem Namen "tube" bekannten Typs zugeordnet sind, eine erste in Richtung vom lokalen System zum entfernten System und eine zweite in Richtung vom entfernten System zum lokalen System, wodurch die Rückführung von Mehrfachausdrucken ermöglicht wird und hauptsächlich die Synchronisation und die Kommunikation einerseits zwischen einem Abfrage- und Steuerprozeß, der in dem lokalen System gestartet wird und die Aufgabe hat, das zugeordnete entfernte System zu überwachen und an es den zu übertragenden Zustandsbefehl zu schicken, und andererseits einem Dateiübertragungsprozeß, der die Aufgabe hat, die zu ändernden Zustände des entfernten Systems an das lokale System zurückzuschicken, sichergestellt ist.

## Claims

1. Method for transferring, to a local system managing a printer, a plurality of files comprising the reports coming from a plurality of remote systems of a network for publishing said reports on the printer of the local system, characterised in that, the printer being connected to a telecommunications network, two synchronisation files of the type known as "pipe" are associated with each file transfer from a remote system, a first synchronisation file in the direction local system to remote system and a second one in the direction remote system to local system, thus permitting the relocation of multiple publications and principally ensuring the synchronisation and communication between, on the one hand, a scanning and control process initiated on the local system and responsible for monitoring the associated remote system and for sending it the command for the report to be transmitted and, on the other hand, a file-transfer process responsible for sending the reports to be published from the remote system to the local system.

2. File-transfer method according to Claim 1, characterised in that, furthermore, a scanning configuration file is associated with each scan, said scanning configuration file containing mainly the parameters relating to the name of the local system, the name of the remote system being scanned, the name of the mailbox being scanned, the scanning start time, the name of the disk for relocation of reports and the parameters of the reports to be relocated.

3. File-transfer method according to Claim 1 or 2, characterised in that, via the synchronisation files communicating the various messages by means of a specific application, in a first stage the scanning and control process interrogating the file-transfer process to find out the names of the reports to be transferred to the local system with a view to printing sends a message containing a report-name request, which request contains the information making it possible to know also the name of the mailbox of the remote system in which the name of the desired report is located, then, in a second stage, the file-transfer process, in response to this request, examines said mailbox in order, if the latter is empty, to send a specific message to the local system and, if not, to send to the local system information relating to the name of the report together with its location on the remote system, and also relating to the print parameters, which information is then used by the scanning and control process which, in a third stage, performs the relocation of the pending report, the relocated report then being stored on a host disk of the local system in a directory allocated to it and finally, in a fourth stage, at the end of the transfer, a print command is issued for publishing the report on the printer of the desired local system.

4. File-transfer method according to Claim 3, characterised in that the scanning and control process starts by reading the appropriate scanning configuration file to find out the information necessary for scanning, *inter alia,* the name of the remote system to be monitored and the name of the mailbox in which the desired report is stored, then goes into a first loop, communicates with the remote system via the first synchronisation file in which it writes the information for the report-name request, issues the command of the specific application for transmitting information, stands by to read a response from the remote system, via the second synchronisation file, and goes into a second loop, if the response includes a "mailbox empty" message, keeps waiting for a predetermined time then sends another request or, if the response includes the name of the report to be relocated, requests its transfer via the first synchronisation file by means of the specific application, relocates this report, which is stored in an appropriate directory and finally issues a print command.

5. File-transfer method according to Claim 4, characterised in that the file-transfer process in a preliminary phase of monitoring waits for a message coming from the local system via the first synchronisation file, then goes into a loop when it detects the arrival of the message and reads the information containing, *inter alia,* the name of the mailbox in which the report to be relocated must be stored and the name of the local system awaiting the report to be relocated, then goes to read from the appropriate mailbox whether the desired report is stored there and, by means of the specific application via the second synchronisation file, whether the mailbox is empty and, on reception of an error code, sends to the local system a "mailbox empty" message, otherwise on reception of the information relating to the name of the desired report with its exact location and its print parameters, sends to the local system said information concerning the report to be relocated.

6. File-transfer method according to Claim 5, characterised in that, furthermore, a stop process is used locally in order to interrupt one or more scans, a stop message being written for this in the synchronisation file of a particular scan, and for each of the scans to be interrupted.

7. File-transfer method according to Claim 6, characterised in that, furthermore, a monitoring process is provided for unlocking the local system in the case of a network problem, the process being responsible for issuing locally, each time a predetermined time interval starts, and throughout the application of the method, a specific message written to the synchronisation file, the scanning and control process, which receives and analyses said specific message and counts the number of its successive appearances, detecting that the network is locked and then being automatically interrupted when only said message, without any other information, is received a predetermined successive number of times.

8. Automatic controller for relocating multiple publications using the transfer method according to any one of the preceding claims, said method for transferring, to a local system managing a printer, a plurality of files comprising the reports coming from a plurality of remote systems of a network for publishing said reports on the printer of the local system, being defined in that, the printer being connected to a telecommunications network, two synchronisation files of the type known as "pipe" are associated with each file transfer from a remote system, a first synchronisation file in the direction local system to remote system and a second one in the direction remote system to local system, thus permitting the relocation of multiple publications and principally ensuring the synchronisation and communication between, on the one hand, a scanning and control process initiated on the local system and responsible for monitoring the associated remote system and for sending it the command for the report to be transmitted and, on the other hand, a file-transfer process responsible for sending the reports to be published from the remote system to the local system.
